(19) Europäisches Patentamt

European Patent Office

Office européen des brevets

(11) Publication number: **0 206 399 B1**

## (12) EUROPEAN PATENT SPECIFICATION

(45) Date of publication of patent specification: **19.11.92**

(51) Int. Cl.5: **B04C 7/00**, B01D 45/12

(21) Application number: **86201003.0**

(22) Date of filing: **10.06.86**

(54) Apparatus and process for solids-fluid separation.

(30) Priority: **28.06.85 GB 8516335**

(43) Date of publication of application:
**30.12.86 Bulletin 86/52**

(45) Publication of the grant of the patent:
**19.11.92 Bulletin 92/47**

(84) Designated Contracting States:
**BE CH DE FR GB IT LI SE**

(56) References cited:
EP-A- 0 139 392    DE-C- 851 483
DE-C- 875 933    GB-A- 2 013 530
GB-A- 2 077 631    US-A- 2 888 096
US-A- 2 901 420    US-A- 4 343 707
US-A- 4 394 349

(73) Proprietor: **SHELL INTERNATIONALE RE-
SEARCH MAATSCHAPPIJ B.V.**
**Carel van Bylandtlaan 30**
**NL-2596 HR Den Haag(NL)**

(72) Inventor: **Barnes, Peter Haddon**
**Carel van Bylandtlaan 30**
**NL-2596 HR The Hague(NL)**

Rank Xerox (UK) Business Services

## Description

The present invention relates to an apparatus and a process for solids-fluid separation and to products obtained by such a process.

A well-known apparatus for solids-fluid separation, which is in particular employed for solids-vapour separation in e.g. catalytic cracking processes, is a cyclone wherein a solids-vapour feed stream is entered horizontally and tangentially in a vertical cylindrical body from which vapour is discharged at the (usually flat) top and solids are discharged from the bottom section of the cyclone.

Although cyclones as described hereinbefore are suitable for many applications, a consequence of their use for separating an upwardly flowing solids-fluid stream (e.g. a catalyst-vapour stream emanating from a catalytic cracking riser reactor) is that an approximately ninety degree deviation of the flow direction of said stream is required before entry into the cyclone. Such a deviation causes an unproductive substantial pressure drop in the solids-vapour stream.

Moreover, when such cyclones are employed outside a reactor vessel, their substantially flat tops require complex bracing in order to withstand the prevailing pressure differentials at relatively high operating temperatures (e.g. 400-600 °C inside the cyclone). The various corners inside said cyclones (e.g. between the flat top and the cylindrical body) can form dead spots where coke formation may take place at said high temperatures during the residence period in said cyclones of e.g. hydrocarbon-containing catalyst particles which are being separated from heavy hydrocarbon vapours.

It has now surprisingly been found that these disadvantages substantially do not exist when employing the novel type of separation apparatus according to the invention comprising a domed upper section in which the upward momentum of a solids-fluid feed stream is efficiently used for separation purposes instead of dissipating energy in unproductive pressure drops.

The invention therefore relates to an apparatus suitable for separating fluid catalytic cracking catalyst particles from gaseous hydrocarbon conversion products comprising upwardly directed feed inlet means of which the upper part cooperates substantially tangentially with a housing comprising at least one fluid outlet means which is in fluid communication with a central section of the housing, and downwardly directed solids outlet means in communication with at least one solids outlet opening in a lower section of the housing, wherein the housing comprises a domed upper section.

It should be noted that from US 2,888,096 a horizontal centrifugal separator is known into which for example catalyst particles can be separated from hydrocarbon vapours. The horizontal centrifugal separator comprises a centrifugation chamber having the shape of a cylinder with a horizontal axis into which a single open-ended overflow outlet tube extends.

In US-4,394,349 four first-stage cyclone separators are positioned tangentially to a collar about the riser reactor. A cylindrical flow-reversal cap returns a mixture of catalyst particles and hydrocarbon vapours exiting the top of the riser reactor vertically downwards. High inertia catalyst particles pass through the annular space between the collar and the riser whilst vapours and entrained catalyst particles pass laterally via openings in the collar to the cyclone separators.

In US-A-4,343,707 a device for separating out solids suspended in flowing pure water systems is disclosed comprising a vertically arranged helical conduit through which the suspension is passed with a magnet mounted around the helix. Centrifugal and magnetic forces co-act to direct the suspended solids out of one or two outlet nozzles . The device has at each end a hemispherical cap (9) which is isolated from the suspension flow path.

In DE-C-851 483 a device is disclosed for the separation or concentration of solid particles-containing mixtures such as water containing coals or earth. The device comprises a spherical housing to which is connected an inlet means for the mixture and two separate outlet means for the separated components.

It will be appreciated that the domed upper section of the apparatus of the invention relates to various kinds of dome-shaped constructions, usually having a partly or completely circular, elliptical or polyhexagonal base. The curvature of the domed upper section in the tangential plane defined by the feed inlet and the central axis of the base may be spherical or elliptical.

Preferably the domed upper section of the housing is substantially spherical, while most preferably the whole housing is substantially spherical in order to attain an optimal flow pattern of the solids and fluid streams which results in high solids separation efficiency, a relatively short solids residence time (in order to avoid undesired reactions) and a low pressure drop in the apparatus.

It will be understood that, in view of the centred stream of solid particles, one or both sides of the housing may be truncated. In that case the substantially vertical sides may be flat for instance, or may have the form of a truncated cone. Preferred embodiments of the apparatus according to the invention comprise spherical domed upper sections and spherical housings having one or two truncated sides.

The apparatus according to the invention can be employed in processes wherein solids have to be separated from fluids (in particular gases at elevated temperatures and pressures) such as catalytic cracking, shale conversion processes and coal- or heavy oil gasification.

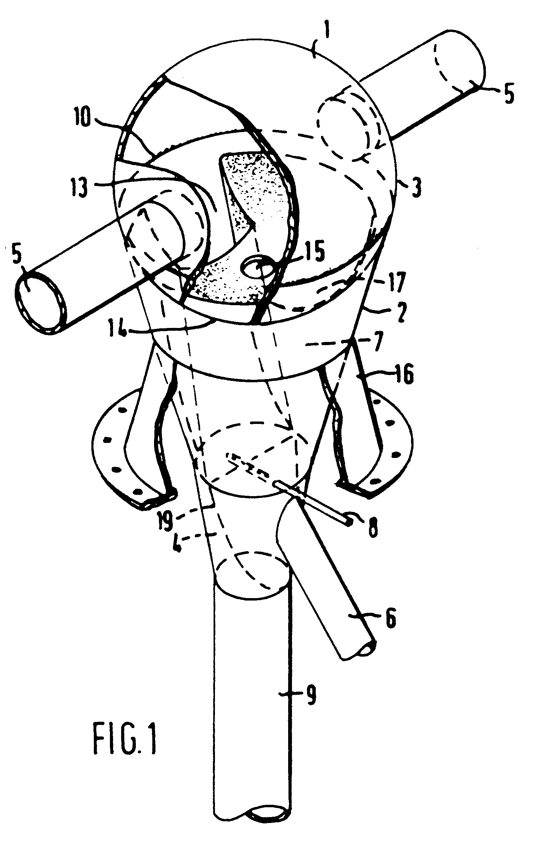

Various embodiments of the apparatus according to the invention are described hereinafter, using Figures 1-8 in which reference numerals relating to corresponding parts are the same.

The apparatus depicted in Figure 1 comprises a substantially spherical housing (1) provided with two fluid outlet means (5) in the central section (3) of the housing and a feed inlet opening (13), a fluid ventilation opening (15) and a solids outlet opening (17) in the lower section (14) of the housing. The housing (1) is partially enclosed (below line 10) by an inverted frusto-conical supporting body (2) which is connected to a feed inlet (9), a solids outlet (6) and a frusto-conical support (16). The space enclosed by the supporting body (2) is divided by a wall (19) into two sections, i.e. feed inlet (4) and solids bin (7).

In Figures 2-4 an apparatus is shown which is similar to that of Figure 1, except for the fluid outlet means (5) forming a tube with an opening (16) in the lower central part thereof. In Figure 2 a plan view of the apparatus is given, whereas Figure 3 represents a side elevation and Figure 4 a longitudinal section through AA' in Figure 3.

In Figures 5 and 6 a longitudinal section, respectively a plan view, are given of a separation apparatus which is integrated with a riser reactor and a stripper vessel.

In Figures 7 and 8 two longitudinal sections are shown of a separation apparatus which is integrated with a riser reactor, a stripper vessel and an outlet fluid and stripper vapours collecting chamber.

Figure 1 represents a suitable embodiment of an apparatus according to the invention. Such a design does not only provide a compact and structurally strong apparatus, it also suitably provides a substantially enclosed solids bin (7), i.e. the part of the solids outlet means contained within the supporting body (2) underneath the housing which body is connected to the central section of the housing, wherein gas (e.g. steam) feed means (8) may be present so that interstitial and/or absorbed compounds (e.g. hydrocarbons) can be at least partially removed from the solids which have been separated in the housing (1) from the bulk of the fluid compounds leaving the housing through fluid outlet means (5).

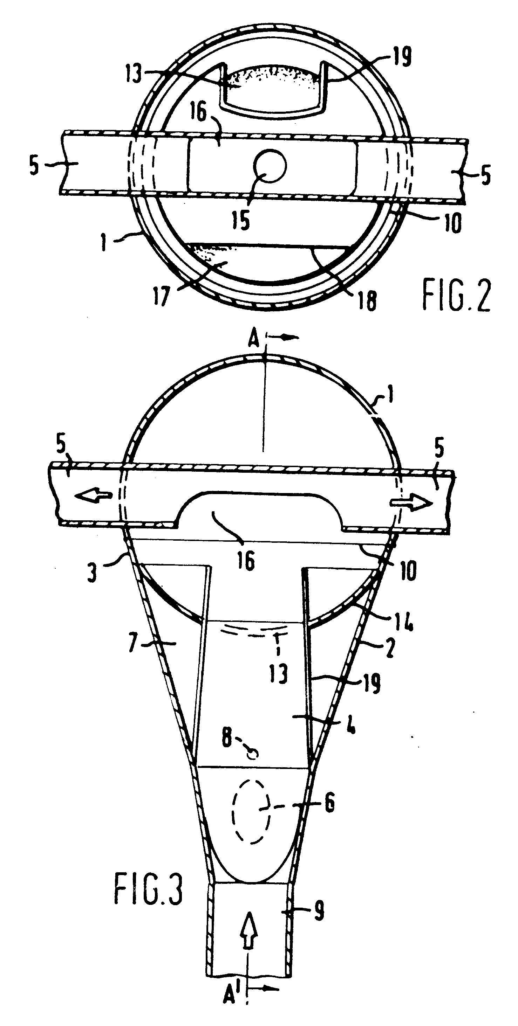

In Figures 2, 3 and 4 another suitable embodiment of the apparatus according to the invention is shown. An advantage of the inverted frusto-conical support (2) in said apparatus is that the circular top-edge (10) of the support (2) cooperates with the housing (1) which results in a structurally strong apparatus and relatively simple circular connection (usually by means of welding) of the housing (1) with the supporting body (2).

The simple frusto-conical support (16) does not only support the separation apparatus but also riser reactor (9), thus overcoming the need for expansion bellows which would otherwise be required in order to cope with the expansion of the riser reactor during start-up.

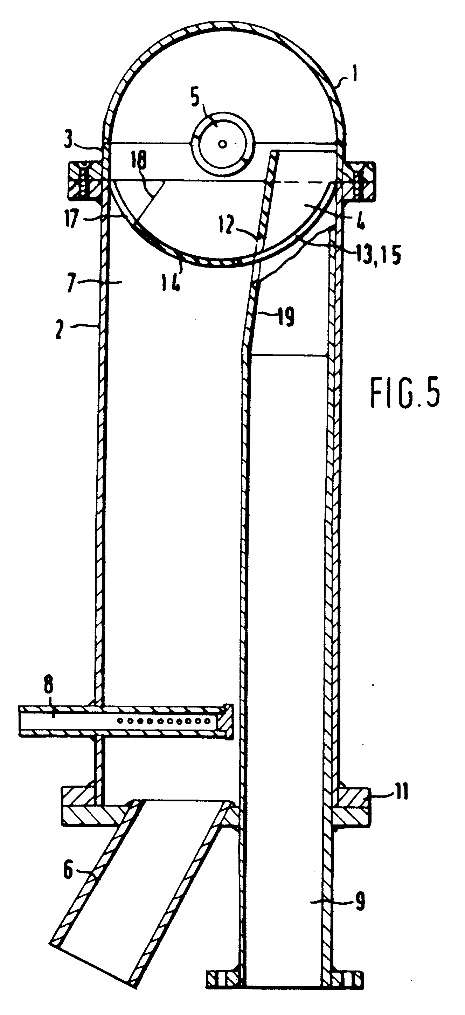

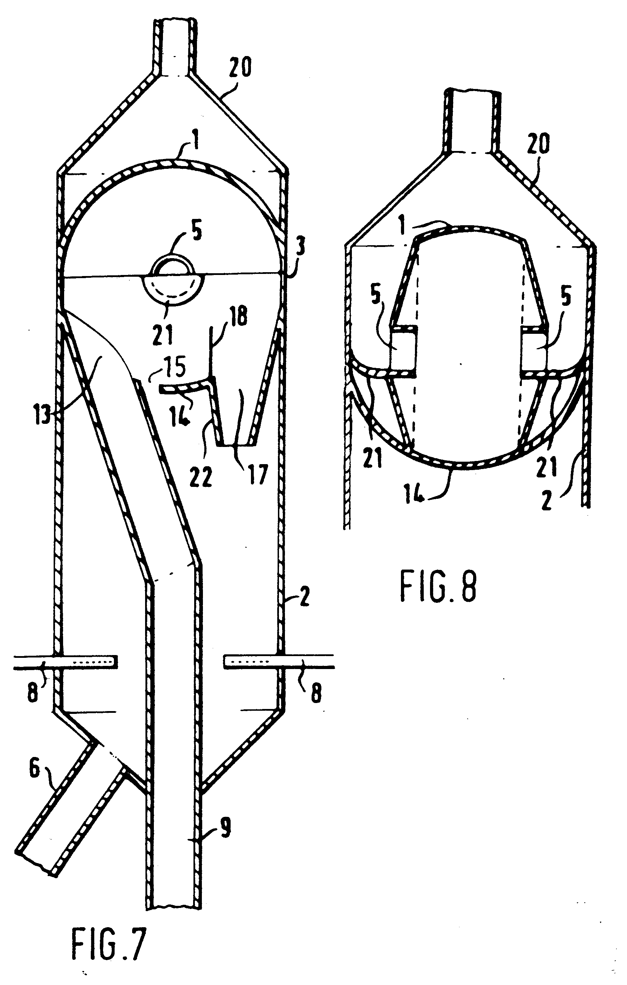

In an embodiment of the apparatus according to the invention as depicted in Figures 5 and 6, which is particularly preferred for application in a fluid catalytic cracking process, the supporting body (2) comprises a substantially cylindrical vessel enclosing a substantially cylindrical riser reactor (9) extending through the bottom section (11) of the vessel, the upper part (12) of the riser reactor cooperating with an opening (13) in the lower section (14) of the housing. The riser reactor may be connected or disconnected from the separating apparatus, the latter to solve expansion problems. The cylindrical vessel suitably has a length: diameter ratio of from 3-10, preferably of from 4-7 for optional stripping of hydrocarbons from cracking catalyst particles by means of steam or other stripping gases which are suitably introduced through gas feed means (8) into one or more lower sections of the vessel. A fluid ventilation opening (15) is situated around the riser reactor top to allow the stripper vapours to flow into the housing.

In another embodiment of the apparatus according to the invention as depicted in Figures 7 and 8, which is particularly preferred for application in a fluid catalytic cracking process, the supporting body (2) comprises a substantially cylindrical vessel enclosing a cylindrical riser reactor (9) extending through the bottom section (11) of the vessel, the upper part (12) of the riser reactor cooperating with an opening (13) in the lower section (14) of the two-sided truncated housing (1), and the fluid outlet means (5) cooperating with an outlet fluid and stripping vapours collecting chamber (20). The outlet means (5) are provided with fluid stream conductors (21). The solids outlet opening (17) is connected with a funnel shaped solids conductor (22). A fluid ventilation opening is situated around or beside the riser reactor top. The separation efficiency of this apparatus may be up to 99.9%.

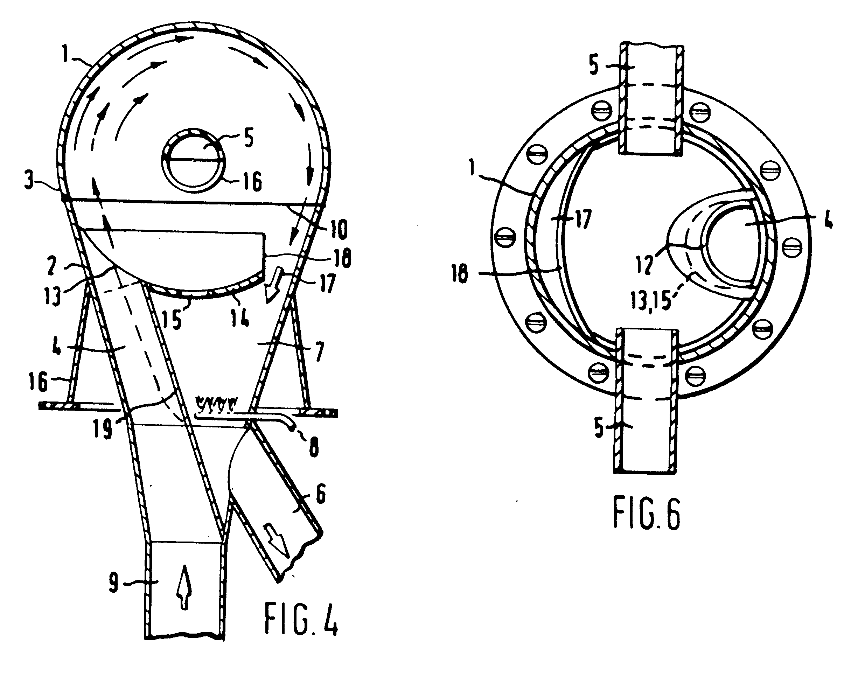

Both when the stripper vessel is integrated (see Figures 5 and 6) with the catalyst outlet means of the solids-fluid separation apparatus and in an embodiment where pre-stripping gas feed means are present in the catalyst bin within the supporting body of said apparatus (see Figures 3 and 4), the lower section (14) of the housing (1) located on top of the stripper vessel, respectively supporting body, preferably comprises at least one fluid ventilation opening (15). Through said opening (15) vapours evolving from (pre-)stripped catalyst particles can flow into the domed housing. However, the (pre-)stripper vapours can also be kept separate from the vapours originating from the riser reactor, if desired, by providing a separate vapour outlet for said (pre-)stripper vapours in an apparatus without said opening.

The apparatus according to the invention suitably comprises one, preferably two, fluid (e.g. vapour) outlet means (5) located substantially horizontally and opposite to each other in the central section (3) of the housing. The fluid outlet means are suitably placed substantially perpendicular to the tangential plane defined by the feed inlet and the central axis of the base of the domed upper section. A major advantage of such horizontal outlet means is that these can be directly connected to horizontal feed inlets of second stage cyclones of the conventional type without requiring ninety degree bends, as required between two conventional cyclones arranged in series. The two fluid outlet means (5) may form a tube (see Figures 2-4) extending through said housing and comprising at least one opening (16) preferably located at the lower central part of the tube, in order to avoid entrainment of catalyst particles by hydrocarbon vapours during start-up of the catalytic cracking process when the velocity of the catalyst particles in the dome is relatively low. In some of the embodiments of the apparatus according to the invention it may be desired to improve the separation efficiency by placing outlet fluid stream conductors at the end of the outlet fluid means to bend the fluid stream into a certain direction. This holds especially when a stripper vessel is integrated with the separation apparatus. The fluid stream conductors may comprise for instance bended tubes and partly spherical elements, e.g. the cups shown in Figures 7-8.

During normal operation of the apparatus according to the invention the (catalyst) particles follow a flow path in a substantially vertical plane along the inner wall of the housing and leave the housing through solids outlet opening(s) (17) in the lower section (14) of the housing. In order to avoid a flow of solids together with fluid directly from the feed inlet opening (13) via said lower section (14) of the housing to solids outlet opening (17), the latter opening (17) is suitably provided with a shim (18) (see Figures 4-6) which is preferably inclined at an angle of from 15 to 45 degrees with respect to a vertical plane for optimal solids deflection (see in particular Figure 5). In order to avoid a gas flow into the housing via the solids outlet opening, especially when the separation apparatus is integrated with a stripping vessel, the solids outlet opening is suitable provided with a funnel shaped solids conductor, optionally provided with a flapper valve.

Optionally the riser reactor may be narrowed at the top at the end to increase the flow velocity.

The ratio of the maximum internal widths of the housing and the feed inlet means is of from 2 to 7, preferably of from 2.5 to 4.

Although the apparatus according to the invention may be employed fully enclosed by e.g. a stripper vessel comprising a riser reactor on top of which the present apparatus is located, it may be preferred to locate the apparatus outside such a vessel in order to take full advantage of its structurally strong design and to provide easy access for inspection and maintenance of the separation apparatus.

The invention further relates to a process for separating fluid catalytic cracking catalyst particles from gaseous hydrocarbon conversion products which comprises passing a mixture of solid catalyst particles and hydrocarbon-containing gases upwardly and tangentially into a substantially spherical separation zone wherein the mixture is subjected to a rotating movement in a substantially vertical plane, removing catalyst particles from a lower section of the separation zone and removing hydrocarbon-containing gases from a central section of the separation zone. Apart from gaseous hydrocarbon conversion products, other gases such as flue gases or gases obtained in shale conversion processes, coal- or heavy oil gasification processes can also be separated from solid particles in the above-described manner.

Preferably, catalyst particles which have been separated by means of said process are passed to at least one stripping zone which is in gaseous communication with the separation zone, and catalyst particles are contacted in the stripping zone(s) with a stripping gas (e.g. steam).

Moreover, the invention relates to hydrocarbon conversion products prepared by a process as described hereinbefore.

The invention will be further elucidated by means of the following Example:

EXAMPLE

A feed stream of hydrocarbon vapours and cracking catalyst particles in a weight ratio of 0.15 enters feed inlet (4) of a separation apparatus as depicted in Figure 1 at a temperature of 500 °C, a pressure of 2 bar and a vapour velocity of 18 m/s. Catalyst particles are removed through solids outlet (6) with a separation efficiency of more than 98% on a weight basis, whereas hydrocarbon vapour streams comprising less than 2% by weight of catalyst particles, based on total catalyst weight in the feed stream, leave the apparatus through vapour outlets (5).

## Claims

1. Apparatus suitable for separating fluid catalytic cracking catalyst particles from gaseous hydrocarbon conversion products comprising upwardly directed feed inlet means (9) of which the upper part cooperates substantially tangentially with a housing (1) comprising at least one fluid outlet means (5) which is in fluid communication with a central section (3) of the housing, and downwardly directed solids outlet means (2,6) in communication with at least one solids outlet opening (17) in a lower section of the housing, characterized in that the housing (1) comprises a domed upper section.

2. Apparatus according to claim 1, wherein the domed upper section of the housing (1) is substantially spherical.

3. Apparatus according to claim 1 or 2, wherein the whole housing (1) is substantially spherical.

4. Apparatus according to any one of claims 1 to 3, wherein the part of the solids outlet means contained within a supporting body (2) underneath the housing (1) which body is connected to the central section (3) of the housing comprises gas feed means (8).

5. Apparatus according to any of the preceding claims, which comprises two fluid outlet means (5) located substantially horizontally and opposite to each other in the central section (3) of the housing.

6. Apparatus according to any of the preceding claims, wherein the lower section (14) of the housing comprises at least one fluid ventilation opening (15) which is in communication with the solids outlet means (2,6).

7. Apparatus according to any of the preceding claims, which comprises a fluid stream conductor (21) placed at the outer ends of the fluid outlet means (5).

8. Process for separating fluid catalytic cracking catalyst particles from gaseous hydrocarbon conversion products which comprises passing a mixture of solid catalyst particles and hydrocarbon-containing gases upwardly and tangentially into a separation zone (1) wherein the mixture is subjected to a rotating movement in a substantially vertical plane, removing catalyst particles from a lower section (14) of the separation zone (1) and removing hydrocarbon-containing gases from a central section (3) of the separation zone (1), characterized in that the mixture of solid catalyst particles and hydrocarbon-containing gases are passed into a substantially spherical separation zone (1).

9. Process according to claim 8, wherein separated catalyst particles are passed to at least one stripping zone (7) which is in gaseous communication with the separation zone (1), and catalyst particles are contacted in the stripping zone(s) (7) with a stripping gas.

## Patentansprüche

1. Vorrichtung, die zum Abtrennen von Katalysatorteilchen für ein Fluid-Katalysator-Krackverfahren von gasförmigen Kohlenwasserstoffumwandlungsprodukten geeignet ist, umfassend aufwärts gerichtete Zuführeinlaßmittel (9), deren oberer Teil im wesentlichen tangential mit einem Gehäuse (1) zusammenarbeitet, welches wenigstens eine Fluidauslaßeinrichtung (5), die sich in Fluidverbindung mit einem mittleren Abschnitt (3) des Gehäuses befindet, und nach unten gerichtete Feststoffauslaßeinrichtungen (2,6) aufweist in Verbindung mit wenigstens einer Feststoffauslaßöffnung (17) in einem unteren Abschnitt des Gehäuses, dadurch **gekennzeichnet,** daß das Gehäuse (1) einen gewölbten oberen Abschnitt aufweist.

2. Vorrichtung nach Anspruch 1, wobei der gewölbte obere Abschnitt des Gehäuses (1) im wesentlichen kugelförmig ist.

3. Vorrichtung nach Anspruch 1 oder 2, wobei das gesamte Gehäuse (1) im wesentlichen kugelförmig ist.

4. Vorrichtung nach irgendeinem der Ansprüche 1 bis 3, wobei der Teil der Feststoffauslaßeinrichtung, der in einem Tragkörper (2) unter dem Gehäuse (1) enthalten ist, wobei der Körper mit dem mittleren Abschnitt (3) des Gehäuses verbunden ist, Gaszuführmittel (8) aufweist.

5. Vorrichtung nach irgendeinem der vorhergehenden Ansprüche, wobei die Vorrichtung zwei Fluidauslaßeinrichtungen (5) aufweist, die im wesentlichen horizontal und einander gegenüberliegend in dem mittleren Abschnitt (3) des Gehäuses angeordnet sind.

6. Vorrichtung nach irgendeinem der vorhergehenden Ansprüche, wobei der untere Abschnitt (14) des Gehäuses wenigstens eine Fluidventilationsöffnung (15) aufweist, die sich mit den Feststoffauslaßeinrichtungen (2,6) in Verbindung befindet.

7. Vorrichtung nach irgendeinem der vorhergehenden Ansprüche, wobei die Vorrichtung einen Fluidstromleiter (21) aufweist, der an den Außenenden der Fluidauslaßeinrichtungen (5) angeordnet ist.

8. Verfahren zum Abtrennen von Katalysatorteilchen für ein Fluid-Katalysator-Krackverfahren von gasförmigen Kohlenwasserstoffumwandlungsprodukten, bei welchem ein Gemisch aus festen Katalysatorteilchen und Kohlenwasserstoff enthaltenden Gasen aufwärts und tangential in eine Trennzone (1) geführt wird, in welcher das Gemisch einer Drehbewegung in einer im wesentlichen vertikalen Ebene unterworfen wird, Katalysatorteilchen aus einem unteren Abschnitt (14) der Trennzone (1) entfernt werden und Kohlenwasserstoff enthaltende Gase aus einem mittleren Abschnitt (3) der Trennzone (1) entfernt werden, dadurch gekennzeichnet, daß das Gemisch aus festen Katalysatorteilchen und Kohlenwasserstoff enthaltenden Gasen in eine im wesentlichen kugelförmige Trennzone (1) geführt wird.

9. Verfahren nach Anspruch 8, wobei abgetrennte Katalysatorteilchen zu wenistens einer Stripperzone (7) geführt werden, die sich in Gasverbindung mit der Trennzone (1) befindet, und Katalysatorteilchen in der Stripperzone bzw. in den Stripperzonen (7) mit einem Strippergas kontaktiert werden.

**Revendications**

1. Appareil convenant pour séparer des particules de catalyseur de craquage catalytique fluide d'avec des produits de transformation d'hydrocarbures gazeux, comprenant des moyens d'admission dirigés vers le haut (9) dont la partie supérieure coopère sensiblement tangentiellement avec un carter (1) comprenant au moins un moyen d'évacuation de fluide (5) qui est en communication fluidique avec une section centrale (3) du carter, et un moyen d'évacuation de solides (2, 6) dirigé vers le bas en communication avec au moins une ouverture de sortie de solides (17) dans une section inférieure du carter, caractérisé en ce que le carter (1) comprend une section supérieure à dôme.

2. Appareil selon la revendication 1, dans lequel la section supérieure à dôme du carter (1) est sensiblement sphérique.

3. Appareil conforme à la revendication 1 ou 2, dans lequel la totalité du carter (1) est sensiblement sphérique.

4. Appareil conforme à l'une quelconque des revendications 1 à 3, dans lequel la partie du moyen de sortie de solides contenue dans un corps support (2) au-dessous du carter (1), lequel corps est relié à la section centrale (3) du carter, comprend un moyen d'alimentation en gaz (8).

5. Appareil conforme à l'une quelconque des revendications précédentes, qui comprend deux moyens de sortie de fluide (5) établis sensiblement horizontalement et opposés l'un à l'autre dans la section centrale (3) du carter.

6. Appareil conforme à l'une quelconque des revendications précédentes, dans lequel la section inférieure (14) du carter comprend au moins une ouverture de ventilation de fluide (15) qui est en communication avec le moyen de sortie de solides (2, 6).

7. Appareil conforme à l'une quelconque des revendications précédentes, qui comprend un conducteur de courant fluide (21) placé aux extrémités des moyens de sortie de fluide (5).

8. Procédé pour séparer des particules de catalyseur de craquage catalytique fluide d'avec des produits de transformation d'hydrocarbures gazeux qui comprend les étapes consistant a faire passer un mélange de particules de catalyseur solide et de gaz contenant des hydrocarbures, vers le haut et tangentiellement, dans une zone de séparation (1) dans laquelle le mélange est soumis à un mouvement rotatif dans un plan sensiblement vertical, à extraire les particules de catalyseur d'une section inférieure (14) de la zone de séparation (1) et à extraire les gaz contenant des hydrocarbures d'une section centrale (3) de la zone de séparation (1), caractérisé en ce que l'on fait pénétrer le mélange de particules de catalyseur solide et de gaz contenant des hydrocarbures dans une zone de séparation sensiblement sphérique (1).

9. Procédé conforme à la revendication 8, dans lequel les particules de catalyseur séparées passent dans au moins une zone de rectification (7) qui est en communication gazeuse avec la zone de séparation (1), et les particules de catalyseur sont mises en contact dans la (les) zone(s) de rectification (7) avec un gaz de rectification.

FIG.1

FIG.2

FIG.3

EP 0 206 399 B1

FIG.6

FIG.4

10

FIG.5

FIG.7

FIG.8